# EUROPEAN PATENT SPECIFICATION

(11) **EP 0 320 251 B1**
(45) Date of publication and mention of the grant of the patent: **03.03.1993**
(21) Application number: 88311613.9
(22) Date of filing: 08.12.1988
(51) Int. Cl.: G02B 26/02, G02B 6/28

(54) **Fibre optic switching system**
Fiberoptisches Schaltsystem
Système de commutation fibre-optique

(30) Priority: 10.12.1987 GB 8728907
(43) Date of publication of application: 14.06.1989
(73) Proprietor: OXLEY DEVELOPMENTS CO., LTD., Ulverston Cumbria LA12 9QG (GB)
(72) Inventor: Edwards, Geoffrey Stephen, Grange-over-Sands Cumbria (GB)
(74) Representative: Huntingford, David Ian

(56) References cited:
- EP-A- 0 089 237
- EP-A- 0 287 253
- PATENT ABSTRACTS OF JAPAN, vol. 7, no. 168 (P-212)(1313), 23 July 1983 & JP A 58075103
- PATENT ABSTRACTS OF JAPAN, vol. 7, no. 196 (P-219)(1341), 26 August 1983 & JP A 5895701
- PATENT ABSTRACTS OF JAPAN, vol. 4, no. 100 (P-19)(582), 18 July 1980 & JP A 55059402
- IBM TECHNICAL DISCLOSURE BULLETIN, vol. 16, no. 8, January 1974, p. 2452, Armonk, USA; K. KASER et al.: "Push-button switches for optical fibres".
- IBM TECHNICAL DISCLOSURE BULLETIN, vol. 24, no. 9, February 1982, pp 4500, 4501, Armonk, USA; M. JOHNSON: "Bistable detent mechanism for fiber-optic switches".
- EPO Applied Technology Series, vol. 5, Geisler, Beaben & Boutruche, "Optical Fibres", Pergamon Infoline Inc., page 301.

## Description

The present invention is concerned with fibre optic light transmission systems and in particular with a means for the controlled routing of light signals between different fibre optic paths.

It is well known that fibre optic coupling can be achieved simply by fusing together two crossed fibre optics at a point on their peripheries so that there is controlled "leakage" from one light path to the other. Such couplings are, however, of a permanent nature and thus provide permanent interconnection between the two light paths.

It is also known (JP-A- 58-95701 and JP-A- 58-75103) that a fibre optic switching system can be formed by having two or more crossing optical fibres and a means for selectively bringing said optical fibres into mutual effective engagement at the location where the fibres cross, such that light leakage between these optical fibres occurs for as long as they are held in said effective engagement with one another.

It is also known in the art that, when leading light from one fibre optic to another, an index matching fluid disposed between the fibre optics will improve the coupling therebetween.

It is an object of the present invention to provide a selectively switchable fibre optic coupling between two or more fibre optics which is improved compared to the known device.

In accordance with the present invention there is provided a fibre optic switching system comprising at least two crossing optical fibres and a means for selectively bringing said optical fibres into effective mutual engagement at the location where the fibres cross, such that light leakage between these optical fibres occurs for as long as they are held in said effective engagement with one another, the crossing fibres being enclosed in a liquid, at least during the time that their mutual engagement is effective, wherein some or all of the coupling of the light signal between the crossing fibres takes place via the liquid, said liquid is a thixotropic liquid and each optical fibre carries a respective body of thixotropic liquid such that when the fibres are brought into said effective mutual engagement, the bodies of thixotropic liquid join to form a larger body constituting said liquid and which encloses the areas of the fibres that are in effective engagement to achieve more efficient transfer of light signals between the fibres.

Preferably, a portion of the outer, lower refractive index glass of each fibre optic is removed so that mutual engagement is achieved between the inner, higher refractive index glass of each fibre optic when two fibres are selectively brought together.

In a preferred embodiment, a matrix of crossing optical fibres can be selectively pressed together manually by operation of a selected push button so as to achieve a desired routing of light signals between the fibres. Interconnection of the fibres might only be achieved whilst the push buttons are pressed. Alternatively, a mechanism, such as a spring-loaded detent, could be provided for each push-button so as to maintain a selected interconnection until it is required to be released.

The crossing angle between the various fibre optics need not, and probably should not, be 90^{°} and the arrangement is preferably such that the x-axis and y-axis fibres cross at an oblique (obtuse) angle to each other, the smaller the angle that the light has to be routed through, then the more efficient is the transfer of the light signal therebetween.

The invention is described further hereinafter, by way of example only, with reference to the accompanying drawings, in which:-
Fig. 1 shows diagrammatically in cross-section an individual optical fibre having a portion removed to expose its inner, higher refractive index glass; and
Fig. 2 shows diagrammatically an oblique matrix of optical fibres forming a light routing system embodying the present invention.

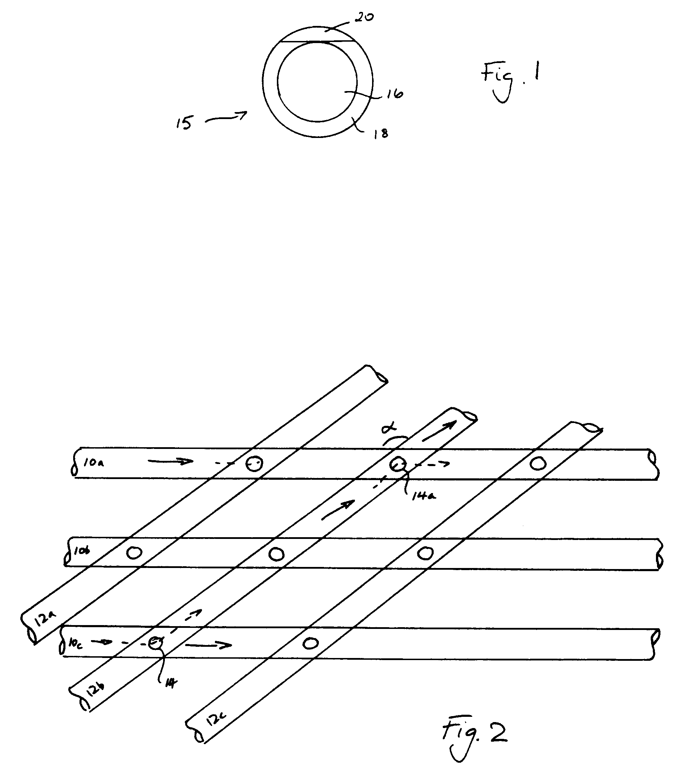

Fig. 1 shows a cross-section through a typical fibre optic 15 which has an inner glass core 16 of relatively high refractive index glass encased in an outer sheath 18 of a relatively low-refractive index glass. Light signals introduced into the inner glass core are substantially confined therein by virtue of the change in refractive index at the junction between the two different glasses. However, if a portion 20 of the outer sheath 18 is removed from two such fibre optics and they are brought into a position where the exposed surfaces of the innner cores 16 are in effective engagement, a part of an original light signal introduced into one of the cores 18 can pass between the cores at the point of effective engagement so as to continue on a new light path defined by the core of the other fibre optic. It is this effect which is used in the present invention to enable selective routing of light signals between different paths.

Referring now to Fig. 2, there is shown a matrix comprising two sets of parallel optical fibres 10a, 10b, 10c, 12a, 12b, 12c crossing obliquely at an obtuse angle a of about 140^{°}. A means 14 is provided at each crossing point of the matrix which enables the crossing fibres 10, 12 to be brought into effective engagement at that point. For example, the means 14 could be in the form of a spring-detented push button which, once pressed, holds the associated fibres in effective engagement until such time as it is pushed again to release the detent.

Thus, if the push-button 14 is pushed, the fibre optics 10c and 12b are brought into effective engagement in the region of the button 14 whereby to enable at least part of the light signal carried by the fibre 10c to leak into the fibre 12b, as indicated by the dotted arrow. Any number of such transfers can be made by selection of suitable push-buttons. For example, a further transfer between the fibres 12b and, say 10a, might be obtained by pressing the push-button 14a.

As explained in connection with Fig. 1, it is preferred for parts of the inner cores of the various fibre optics to be exposed at each matrix point so as to enhance the leakage between effectively engaging pairs of fibres. The transfer of light signals between the fibres is enhanced by the provision of a liquid between and/or around the joint so as to minimise the change of refractive index experienced by light signals attempting to "leak" from one inner core to another. Thus, the "effective engagement" is achieved via the intermediary of the liquid itself, so that the crossed fibre optics do not actually touch but lie in close juxtaposition with an juxtaposition with an amount of the liquid disposed therebetween to provide a coupling connection for the transfer of light signals. The liquid used in the present invention is a thixotropic liquid so that a liquid portion remains permanently associated with each fibre but joins intimately with a liquid portion associated with another fibre during the time that such fibres are brought into effective engagement.

## Claims

1. A fibre optic switching system comprising at least two crossing optical fibres (10,12) and a means (14) for selectively bringing said optical fibres (10,12) into effective mutual engagement at the location where the fibres cross, such that light leakage between these optical fibres (10,12) occurs for as long as they are held in said effective engagement with one another, characterised in that the crossing fibres (10,12) are enclosed in a liquid, at least during the time that their mutual engagement is effective, wherein some or all of the coupling of the light signal between the crossing fibres takes place via the liquid, and in that said liquid is a thixotropic liquid and each optical fibre (10,12) carries a respective body of thixotropic liquid such that when the fibres are brought into said effective mutual engagement, the bodies of thixotropic liquid join to form a larger body constituting said liquid and which encloses the areas of the fibres that are in effective engagement to achieve more efficient transfer of light signals between the fibres.

2. A fibre optic switching system as claimed in claim 1, wherein said means (10) for bringing said crossing fibres selectively into mutual effective engagement comprises a push-button adapted to displace one or both of the crossing fibres laterally at the region where they cross.

3. A fibre optic switching system as claimed in claim 2, wherein interconnection of the fibres is only achieved for as long as the push-button is being depressed.

4. A fibre optic switching system as claimed in claim 2, wherein the means (10) includes a mechanism for the or each push-button for maintaining a selected interconnection until it is desired to be released.

5. A fibre optic switching system as claimed in claim 4, wherein the or each said mechanism comprises a spring-loaded detent mechanism which when first actuated serves to maintain a selected interconnection of two crossing fibres but which releases this interconnection upon being actuated a second time.

6. A fibre optic switching system as claimed in any of claims 2 to 5, wherein there is a matrix of crossing optical fibres and a plurality of push-buttons corresponding to respective crossing points of the fibres, whereby operation of a selected push-button or buttons can achieve a desired routing of light signals between the fibres.

7. A fibre optic switching system as claimed in any of claims 1 to 6, wherein a portion of the outer cladding layer of lower refractive index glass of each optical fibre is removed so that effective mutual engagement is achieved between the inner core of higher refractive index glass of each optical fibre when two fibres are selectively brought together.

## Patentansprüche

1. Fiberoptisches Schaltsystem mit zumindest zwei sich kreuzenden optischen Fibern (10, 12) und einer Einrichtung (14) zum selektiven Bringen von den optischen Fibern (10, 12) in effektiven gegenseitigen Kontakt an dem Ort, wo die Fiber sich kreuzen, so daß Lichtableiten zwischen diesen optischen Fibern (10, 12) solange auftritt, wie sie in dem effektiven Kontakt miteinander gehalten werden,
dadurch **gekennzeichnet,** daß
die sich kreuzenden optischen Fibern (10, 12) in einer Flüssigkeit, zumindest während der Zeit eingeschlossen sind, während der ihr gegenseitiger Kontakt effektiv ist, wobei ein Teil oder das ganze Koppeln des Lichtsignals zwischen den sich kreuzenden Fibern durch die Flüssigkeit stattfindet und die Flüssigkeit eine thixotrope Flüssigkeit ist und jede optische Fiber (10, 12) einen jeweiligen Körper aus thixotroper Flüssigkeit trägt, so daß, wenn die Fiber in den gegenseitigen effektiven Kontakt gebracht werden, die Körper der thixotropen Flüssigkeit sich vereinigen, um einen größeren Körper zu bilden, was die Flüssigkeit darstellt und die Flächen der Fiber einschließt, welche in effektivem Kontakt sind, um einen effizienteren Transfer von Lichtsignalen zwischen den Fibern zu erreichen.

2. Fiberoptisches Schaltsystem nach Anspruch 1,
dadurch **gekennzeichnet,** daß
die Einrichtung (10) zum selektiven Bringen der sich kreuzenden optischen Fiber in gegenseitigen effektiven Kontakt einen Druckknopf umfaßt, der eingerichtet ist, eine oder beide der sich kreuzenden Fiber seitlich in dem Bereich, wo sie sich kreuzen, zu verschieben.

3. Fiberoptisches Schaltsystem nach Anspruch 2,
dadurch **gekennzeichnet,** daß
eine Verbindung der Fiber nur solange erreicht wird, wie der Druckknopf niedergedrückt wird.

4. Fiberoptisches Schaltsystem nach Anspruch 2,
dadurch **gekennzeichnet,** daß
die Einrichtung (10) einen Mechanismus für den oder jeden Druckknopf umfaßt zum Aufrechterhalten einer gewählten Verbindung solange, bis sie gelöst werden soll.

5. Fiberoptisches Schaltsystem nach Anspruch 4,
dadurch **gekennzeichnet,** daß
der oder jeder Mechanismus einen Rastfedermechanismus umfaßt, der dazu dient, wenn er zuerst betätigt wird, eine gewählte Verbindung zweier sich kreuzender Fiber aufrecht zu erhalten, während er sie diese Verbindung löst, wenn er zum zweiten mal betätigt wird.

6. Fiberoptisches Schaltsystem nach einem der Ansprüche 2 bis 5,
dadurch **gekennzeichnet,** daß
eine Matrix sich kreuzender optischer Fiber und eine Vielzahl von Druckknöpfen entsprechend den jeweiligen Kreuzungspunkten der Fiber vorgesehen ist, wobei der Betrieb eines gewählten Druckknopfes oder von Druckknöpfen ein gewünsches Leiten von Lichtsignalen zwischen den Fibern bewirken kann.

7. Fiberoptisches Schaltsystem nach einem der Ansprüche 1 bis 6,
dadurch **gekennzeichnet,** daß
ein Abschnitt der äußeren Mantelschicht aus Glas mit niedrigem Brechungsindex jeder optischen Fiber entfernt wird, so daß der gegenseitige effektive Kontakt bewirkt wird zwischen dem inneren Kern aus Glas mit höherem Brechungsindex jeder optischen Fiber, wenn die zwei Fiber selektiv zusammengebracht werden.

## Revendications

1. Système de commutation à fibres optiques comprenant au moins deux fibres optiques se croisant (10, 12) et un moyen (14) de mise sélective en prise mutuelle effective de ces fibres optiques (10, 12) à l'endroit où elles se croisent, de façon qu'une fuite de lumière entre ces fibres optiques (10, 12) ait lieu tant qu'elles sont maintenues en prise mutuelle effective, caractérisé par le fait que les fibres se croisant (10, 12) sont enfermées dans un liquide au moins pendant le temps où leur prise mutuelle est effective, une partie ou la totalité du couplage du signal lumineux entre les fibres se croisant ayant lieu par l'intermédiaire de ce liquide, et que ce liquide est un liquide thixotrope et chaque fibre optique (10, 12) porte une masse de liquide thixotrope telle que, lorsque les fibres sont mises en prise mutuelle effective, les masses de liquide thixotrope se joignent pour former une masse plus grande constituant ledit liquide et qui enferme les zones des fibres qui sont en prise effective pour produire une transmission plus efficace de signaux lumineux entre les fibres.

2. Système de commutation à fibres optiques selon la revendication 1, dans lequel le moyen (14) de mise sélective en prise mutuelle effective des fibres se croisant comprend un bouton-poussoir conçu pour déplacer latéralement une des fibres se croisant, ou les deux, dans la région où elles se croisent.

3. Système de commutation à fibres optiques selon la revendication 2, dans lequel l'accouplement des fibres est réalisé seulement tant que le bouton-poussoir est enfoncé.

4. Système de commutation à fibres optiques selon la revendication 2, dans lequel le moyen (14) comporte un mécanisme pour le bouton-poussoir ou pour chaque bouton-poussoir, pour le maintien d'un accouplement choisi jusqu'à ce qu'on désire supprimer celui-ci.

5. Système de commutation à fibres optiques selon la revendication 4, dans lequel le mécanisme ou chaque mécanisme comprend un mécanisme d'encliquetage à ressort qui, lorsqu'il est actionné pour la première fois, sert à maintenir un accouplement choisi de deux fibres se croisant, mais supprime cet accouplement lorsqu'il est actionné une seconde fois.

6. Système de commutation à fibres optiques selon l'une des revendications 2 à 5, dans lequel il y a une matrice de fibres optiques se croisant et une série de boutons-poussoirs correspondant à des points de croisement des fibres, grâce à quoi l'actionnement d'un bouton-poussoir choisi ou de boutons permet de réaliser un acheminement désiré de signaux lumineux entre les fibres.

7. Système de commutation à fibres optiques selon l'une des revendications 1 à 6, dans lequel une partie de la couche extérieure de gainage en verre à plus bas indice de réfraction de chaque fibre optique est enlevée, de façon que la prise mutuelle effective soit réalisée entre l'âme intérieure en verre à plus haut indice de réfraction de chaque fibre optique lorsque deux fibres sont réunies sélectivement.
